# EUROPEAN PATENT APPLICATION

(11) **EP 1 887 210 A2**
(43) Date of publication of application: **13.02.2008**
(21) Application number: 06020220.7
(22) Date of filing: 27.09.2006
(51) Int. Cl.: F02M 21/02

(54) **A device for gas metering, especially for an internal combustion engine**

(30) Priority: 04.08.2006 PL 38037306
(71) Applicant: D.T. Gas System Spólka Jawna, D. Tomaszewska, A. Tomaszewska, N. Tomaszewski, 60-452 Poznan (PL); Spoldzielnia Pracy "MAGNET-ELEKTROMET", 00-778 Warszawa (PL)
(72) Inventor: Zebrowski, Adam Andrzej, 20-532 Lublin (PL); Wendeker, Miroslaw Tadeusz, 20-553 Lublin (PL); Marcinkowski, Andrzej, 02-240 Tluszcz (PL); Cichowski, Edward, 02-778 Warszawa (PL)
(74) Representative: Klassek, Maciej Adam

(57) **Abstract**

The present invention refers to a precise gas metering device, especially for an internal combustion engine. The device comprises an electromagnet and a solenoid valve encompassed within a gastight housing formed by the bodies **(12,13,14)** connected to one another, and the first of them **(12),** constituting the housing of the nozzle **(18),** comprises an outlet hole **(C),** the second one **(13)** is the armature's guide **(25),** and the third of them **(14)** being at the same time an electromagnet's **(20)** pole comprises a gas intake hole; the surfaces of parting planes between the bodies are perpendicular to the axis of the flow channel formed by the bodies **(12,13,14),** and the shutter is located on the opposite side of an elastic member **(26)** in the armature **(25)** which is hollowed in such a manner that side holes are directed in accordance with the gas flow at an angle not less than 30° to the central hole axis and has a gas passage channel, which goes from the inlet **(B),** through the hollow elastic member **(26)** and the chamber **(D)** made in the armature **(25)** and the nozzle **(18)** of the shape close to the Venturi tube, and to the outlet hole **(C).**

## Description

The present invention refers to a precise gas metering device, especially for an internal combustion engine.

With regard to the fact that resources of classic fuels are being depleted, and in view of the cost of petrol and fuel oil, engine fuelling systems based on other fuels, such as LPG, CNG, hydrogen and other combustible gases, have been developed. To reach the engine, gas from the tank is fed through the reducing valve or the reducer vaporizer unit in the case of LPG. The reduced pressure gas is fed to an engine intake manifold, mixed with air and fed to the cylinders of the engine.

In fuelling systems of combustion engines, where the amount of fuel is metered by the carburettor, single point or multi point injection system, and fed with gas, the reducer vaporiser unit is normally connected to the intake manifold by a feed conduit and an air-fuel mixing device. Such feed systems usually have the drawback of failing to precisely meter the fuel and thus the stoichimetric ratio is not obtained, so that the exhaust gas often contains prohibited quantities of contaminating substances.

Various fuel gas feed systems have been proposed, in which the gas from the reducer is fed to a metering unit connected to the intake manifold of the engine by respective flexible conduits so that the system can be installed easily as the secondary feed system for the existing engine fed with the liquid fuel. In one known system, the fuel gas is fed to the intake conduit of each cylinder by a multiple solenoid valve common to all the cylinders feeding gas to the engine manifold. The solenoid valve comprises a group of shutters, each controlled by an electromagnet armature. In another system, the fuel gas is fed from the intake manifold to particular cylinders by a respective solenoid valve of each of them.

In both cases, the armature of each electromagnet is defined by an oblong plate, which rotates about a line of contact with an edge of a fixed member. Contact is ensured by a bar of elastic material acting on one end of the armature plate, which, however, is held in position closing the solenoid valve by a corresponding spring acting on the shutter.

Solenoid valves of this sort have various drawbacks. In particular, the position of the line of contact on the armature may vary due to different component machining and assembly resistance; spring closure makes the solenoid fairly slow-operating. Moreover, the solenoid valve itself is relatively expensive to produce and extremely complicated to assemble and maintain.

In another known solenoid valve for compressed air control circuits, the armature is defined by an oblong plate, which, however, has no return spring and is held in the closed position by the pressure of air stream fed to the chamber by the compressed air outlet conduit. This type of solenoid valve is unsuitable for feeding fuel gas to a combustion engine, owing to the very small difference, normally less than 1 bar, in the fuel gas pressure between the inlet and the outlet conduit of the solenoid valve.

From document US 5 653 422 A, it is also known a solenoid valve having a central inlet channel and two outmost channels, these latter projecting into the interior of a chamber with corresponding nozzles. The armature is provided with a blunt edge on the side facing the solenoid, with which it is pivotally supported on the separating surface. The armature has two recesses provided with relevant seals to alternately close the two nozzles. The armature is urged to normally close one of the nozzles by a spiral spring encompassing this nozzle and engaged in the relevant recess.

From patent document EP 1 267 065 B1, it is known a flap solenoid valve comprising a central inlet channel and two channels feeding gas to the valve chamber. The armature is defined by an oblong plate with a projecting shutter closing the gas outlet nozzle. An elastic member in the form of a bar ensures the valve closing force in the non-voltage condition.

The internal combustion engine fuel gas feed devices produced so far have had two basic drawbacks. The first one is too long the so called opening dead time preventing fuel gas feed control in real time, and the other one is the variable amount of fuel gas fed to the engine cylinder, as a result of which the systems do not comply with effective exhaust gas contamination standards.

There are three basic problems related to the flow of gas inside known devices for gas metering:
1) In small engine loads, i.e. small values of gas pressure in the intake conduit and thus small values of injected gas pressure, kinetic energy of gas is also small which results in degeneration of metering device expenditure characteristics.
2) Gas metering device is always opening with delay in comparison to known petrol injection unit (procedure of observing petrol injecting unit behaviour in dependent systems). Moreover, between the nozzle of gas metering device and the intake conduit there is usually a connecting conduit, which also causes delays in feeding fuel to the engine. The present invention solves this problem as gas reaches the inside of the intake conduit faster.
3) Despite the presence of gas fuel filter, there are solid contaminants in the stream of gas, which in favourable conditions (zero or reverse flow areas at the ends of the metering device labyrinth) form deposits inside the feeding device, thus changing its usable characteristics, leading to unserviceability of the device. The invention device makes it possible to eliminate such contaminants.

The gas feed device according to the invention has at least one controlled solenoid valve feeding gas to a corresponding cylinder of the engine; the solenoid valve comprises an intake hole and at least one outlet hole for said gas fuel, moreover the device has a relevant shutter, which is carried by the armature, in the shape of a hollow cylinder and moving in the body between the valve closing surface and the body resistance surface equipped with the absorber and activated by a relevant electromagnet, and an elastic member acting on said armature with a predetermined elasticity force sufficient to normally hold said shutter in position closing said outlet conduit in case there is no power supplied to the electromagnet; the shutter is located on the opposite side of an elastic member in the armature which is hollowed, so that the central hole of the armature is connected with side holes which are directed as per gas flow direction at an angle not less that 30° to the central hole axis and has a gas passage duct, which goes from the inlet, through the hollow elastic member and hole made in the armature and the nozzle in the shape close to the Venturi tube, to the outlet.

Between the armature and the body there is an elastic member in the form of a toroid, made of elastic material and constituting the armature's absorber. Elasticity of an elastic member is chosen in a manner owing to which the armature does not spring back, and its impact is absorbed.

Surfaces of the armature and the body in the contact area are made in the manner that reduces friction to the maximum; in an advantageous example, they are covered with the material that reduces friction, for instance teflon.

It is advantageous if the shutter has the form of a cylinder, and especially advantageous if in its gas intake section it ends with the gas flow guide.

The surface closing the nozzles may be flat or may be a segment of the sphere of a large radius.

The solenoid valve is encompassed within a gastight housing formed by the bodies connected to one another, and the first of them, constituting the housing of the nozzle, comprises an outlet hole, the second one is the armature's guide and the third of them comprises gas intake valve and is at the same time solenoid's pole; the surfaces of parting planes between the bodies are perpendicular to the axis of the flow duct formed by the bodies.

Calibrated nozzle is mounted in a gastight manner on the body, in the way which prevents its disassembly.

It is advantageous if in the device according to the invention calibrated nozzles are chosen so as to adapt the flow in said solenoid valve to a given engine type. Each valve has a nozzle of a diameter that is known and constant for a given workmanship option, and at the same time undergoes inspection during manufacture which is to check a real flow of gas because each, even minor variance in the production of the injection unit, such as elasticity of closing member, weight of the armature with the shutter, valve stroke and other physical properties, have impact on its efficiency parameters. These values are given for each injection unit so that injection units of the least possible flow variance can be chosen for a given engine. According to the research carried out by creators of the invention, a given injection unit does not virtually change its efficiency characteristics even after long-term use, and changes that occurred after having driven 80 000 km were minor and within the measurement error. For each engine of the car, one knows the cylinders capacity and power of the engine, and for each injection unit cylinders power and capacity range to be handled are defined. Using an injection unit of incorrect parameters results in incorrect operation of the engine and difficulties in its calibration, which means in selecting the amount of fuel for each range of engine revolutions and loads. Similar difficulties occur if only one diameter of the nozzle is available and the flow is controlled by means of inserting the flange between the cylinder and the nozzle, then the delay in the gas flow due to the flange may be such that a portion of gas is fed to the already closed suction valve, which results in incorrect fuelling of the cylinder and hence, in incorrect composition of the mixture.

Nozzles of different inside diameters may be mounted on the body of the invention device.

In the invention device, each of the solenoid valves is mounted directly to relevant intake conduit and each engine cylinder has an individual solenoid valve.

Technical potential of the invention device is used fully when the electromagnet of the valve is controlled selectively and in phases by corresponding width modulation pulses (PWM) generated by an electronic control unit on the basis of signals indicating the manner of engine operation, and also when the electromagnet is controlled by said control unit in sequences, with simultaneous operation of corresponding engine cylinders.

Use of the Venturi tube in the construction of the metering device according to the invention is accelerating the stream and reducing pressure of the flow. Introducing the tube helps in gas flow due to increasing pressure differences between injection unit chamber and intake manifold for relatively small gas feed pressures. For greater engine loads (higher gas feed pressures), the tube does not have any significant importance, yet if it is not well chosen, it may result in blocking the flow. Thanks to using the tube, the stream of gas is accelerated, the flow is more uniform and gas reaches the area of the engine intake valve faster, it also reduces pressure behind the chamber of the device and results in formation of the force that removes deposits inside. At the same time, increasing the flow speed cleans the nozzle of the metering device.

The device according to the invention makes it possible to feed the combustion engine with fuel gas and to meter fuel in a stable manner with the irregularity less than 1% and dead opening time below 3 milliseconds. The invention device is characterised by high reliability and simple structure which is cheap in industrial manufacture.

The device according to the invention is shown as an embodiment in the enclosed figure, in which:
Fig. 1 shows a schematic section of the combustion engine feed system, comprising the invention device injecting gas into the intake manifold of the engine;
Fig. 2 shows a section of the solenoid valve located in the invention device;

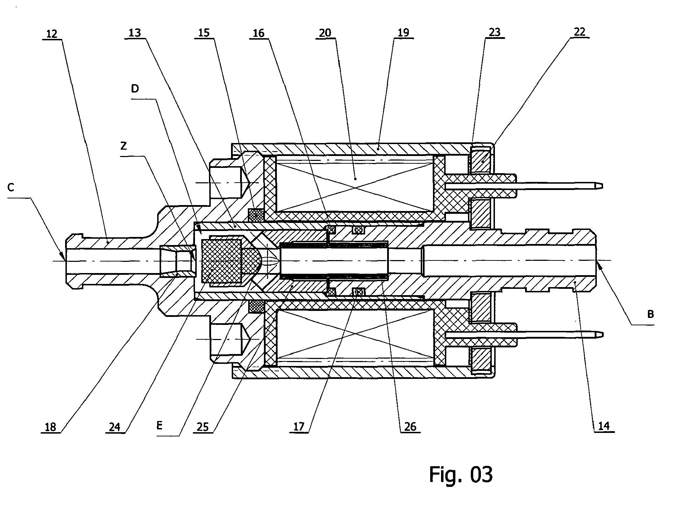

Fig. 3 shows a section of the solenoid valve located in the invention device, as an embodiment, in which the role of the pole piece is performed by the body with the mounted nozzle, made of magnetic material and with an elastic member in the shape of a hollow cylinder.
Fig. 4 shows a distribution of gas velocities in the metering device according to the invention (with the tube), and
Fig. 5 shows a distribution of gas velocities in a comparable metering device (without the tube).

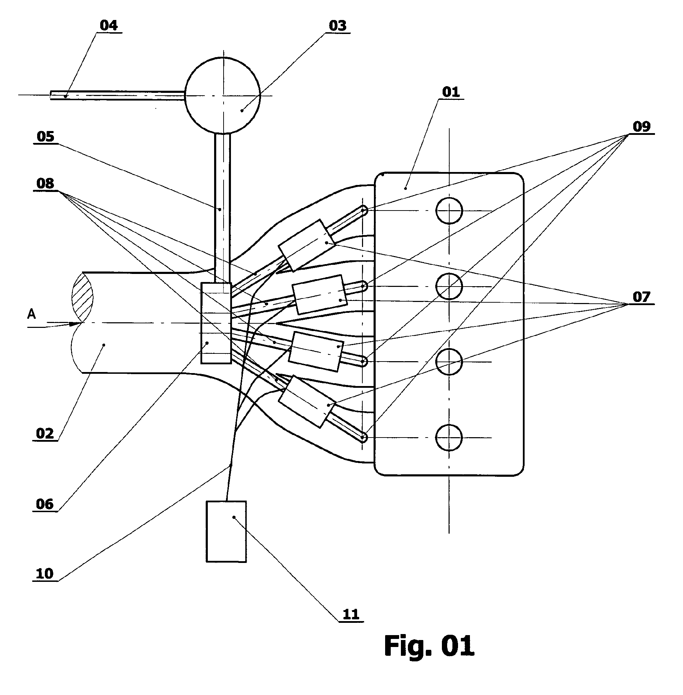

Fig. 1 shows a simplified diagram of fuel gas feed system for fuels such as LPG, CNG, hydrogen etc. in combustion engine, for instance Otto's engine **(01),** which may have 4 cylinders, with each cylinder being fed by the air and fuel mixture created in each channel of the intake manifold **(02).** The air to the manifold **(02)** is fed by air intake **(A)** from the air filter chamber. The gas feed system comprises a gas pressure reducing valve **(03)** connected with the liquid fuel tank (not shown in the figure) by conduit **(04).**

The pressure reducing valve **(03)** is connected by means of a feed conduit **(05)** to the device distributing gas fuel to relevant cylinders, for instance, by means of four flexible connecting conduits **(08),** and indicated generally as **(06)** and feeding gas fuel to the devices **(07)** metering fuel to a single cylinder of the engine **(01);** each metering device may be connected by means of a connector **(09)** with an appropriate intake duct of intake manifold **(02).** By means of a bundle of conduits **(09),** the metering device **(07)** is connected with an electronic control unit **(11)** injecting a precisely metered amount of fuel into each of the cylinders as a function of signals corresponding to the engine **(01)** significant operational values, such as engine rotational speed, torque, acceleration pedal position, external temperature, cooling water temperature, signals from the lambda probe, etc.

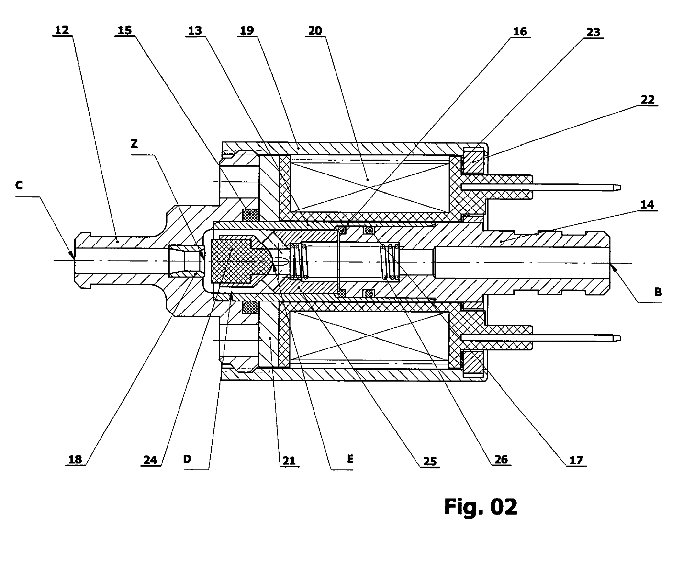

For each of engine **(01)** cylinders, the metering device **(07)** is provided with at least one individual solenoid valve shown in Fig. 2. The valve is housed in a casing comprising three members **(12, 13** and **14)** connected in a known manner with gastight seals **(15, 16** and **17)** inserted between them. The body **(12)** comprises a gas outlet nozzle **(18),** and an outlet hole **(C),** and the body **(14)** gas intake hole **(B).**

Said body **(19)** constitutes a protective shield for at least one of control electromagnets **(20)** and at the same time a core of the electromagnet made of magnetic material. The core **(19)** is closed with two pole pieces **(21)** and **(22)** made of magnetic material, mounted in a known manner, wherein pole piece **(22)** is separated from electromagnet **(20)** with the plate **(23).** Thicknesses of the plate **(23),** pole pieces **(21)** and **(22),** electromagnet coil form **(20),** bodies **(13)** and **(14),** and elastic sealing **(15)** have been chosen in such a manner that the closing surface of the nozzle **(18)** and the shutter **(24)** of the armature **(25)** of the electromagnet form the valve closing surface **(Z).**

Both bodies **(12** and **13)** form a chamber **(D)** connected with outlet hole **(C)** and intake (**B**) hole in the body **(14).** The chamber **(D)** holds the outlet conduit's cylinder-shaped shutter **(24)** made of elastomeric material and moved in a known manner by the electromagnet armature **(25)** defined as a hollow cylinder. To be more precise, the armature **(25)** is provided with a shutter **(24)** forming a valve closing surface, perpendicular to the axis of the nozzle **(18)** and outlet hole **(C)**; the armature **(25)** has at least one hole used for gas flow from the intake **(B)** to the chamber **(D).**

In the invention device the armature **(25)** moves in the body **(13)** in a manner ensuring least resistance for gas flowing between the outlet hole **(C)** and the intake hole **(B).** The armature is at the same time pressed with the elastic material **(26)** to the nozzle closing surface **(18)** so that generated elasticity force is sufficient to normally hold the shutter **(24)** in position closing the outlet hole **(C).** Elastic material is described as the coil-type spring or hollow cylinder made of elastic material.

One of the advantages of the invention consists in that surfaces of the armature **(25)** and the body **(13)** in the working area have been made in a manner that ensures maximum reduction of friction, for instance both surfaces may be covered with the material reducing friction, and in a special case, they are covered with teflon.

An advantage of the invention consists in hollowing the armature **(25)** in a manner ensuring slightest resistance to flowing fuel gas, and at the same time the shutter **(24)** is designed in such a manner that the surface of the shutter opposite to the closing surface **(Z)** creates the guide **(E)** for flowing gas.

An advantage of the invention consists in that an outlet hole **(C)** of the solenoid valve shown in figure 2 also comprises a calibrated nozzle **(18)** of the shape close to the Venturi nozzle, fastened in a way that prevents any change of the diameter by the user and thus, any change of manufacturer's calibration.

Calibrated nozzle is fastened to slightly project over the surface of the body **(12).** The nozzle has contact area with the shutter rounded with the radius so with the force generated by elastic material **(26)** acting with specific force on the armature **(25)** in such a manner that the shutter **(24)** closes the gas outlet, by means of which it performs the function of gastight sealing when the solenoid valve is closed.

In order to fit the nozzle **(18)** inside the body **(12),** it is precisely defined during the installation how much the nozzle **(18)** may project over the body **(12).**

An advantage of the invention device is also the fact that the solenoid valve, supplying each of the engine **(01)** cylinders can hold at least one electromagnet **(20).** The electromagnet **(20)** is placed outside the gas flow area so electromagnet **(20)** coils do not have contact with flowing gas, and at the same time the electromagnet **(20)** is cooled with the gas flowing through the duct formed by the bodies **(12, 13** and **14)** connecting the intake **(B)** with the outlet **(C)** hole.

The body **(12)** is attached to the body **(19)** in a known manner. The body **(12)** is provided with a recess for placing a gastight seal **(15)** inside and at the same time is a connector for connecting the connector's **(09)** conduit, which couples, as shown in figure 1, the valve with the manifold's intake duct **(02)** of the corresponding engine **(01)** cylinder. An advantage of the invention is the fact that the outlet nozzles mounted in the body **(12)** are thus calibrated that they correspond exactly with the parameters of the engine on which valves are installed.

A definite advantage of the invention is also providing the calibrated nozzles **(18)** with different diameters to induce various gas flows depending on the engine demand. The electronic control unit **(11)** activates the solenoid valves depending on the engine **(01)** operating conditions and generates control pulses of modulated width in order to regulate the operation of electromagnets **(B)** using pulse width modulation (PWM). Consequently, the electronic control unit **(11)** opens the shutter **(24)** for a variable period of time during the intake phase for the corresponding engine **(01)** cylinder which makes the operation of the engine extremely elastic.

For engine **(01)** feed each cylinder must be assigned at least one metering device **(07).**

Figure 2 shows a diagram of the metering device **(07)** for a one cylinder of the engine **(01).**

Obviously, it is possible to modify the feed devices described herein without changing the scope of related patent claims. These modifications may, for instance, be introduced in the form of a solenoid valve and an appropriate armature **(25)**, and a coil-type spring may be replaced with a different one.

Construction of the feed device **(07)** may be module-based which makes it possible to obtain a device of a variable number of modules, whereas the ends of intake and outlet conduits may be designed to be connected with corresponding conduits in a known manner.

The solenoid valve of each engine cylinder may also be provided with more than one electromagnet which, in turn, may be installed in the casing in any position. In normal feed devices, solenoid valves and electromagnets may be installed in two or more rows.

### Examining the influence of the Venturi tube on effectiveness of the invention device

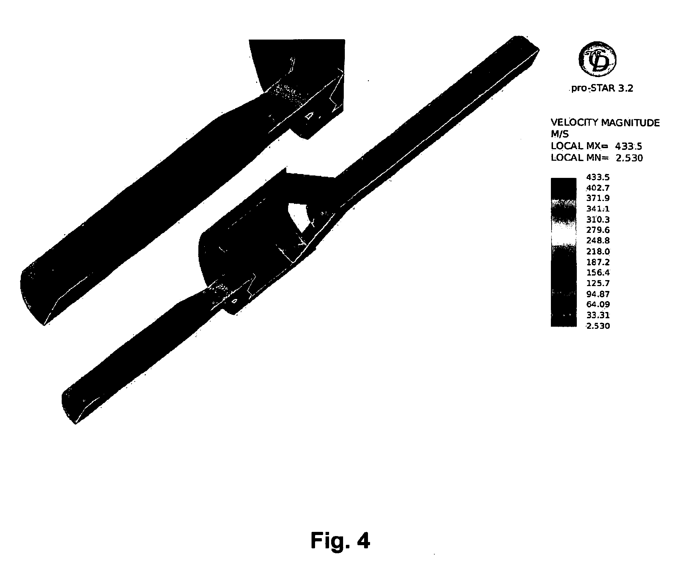

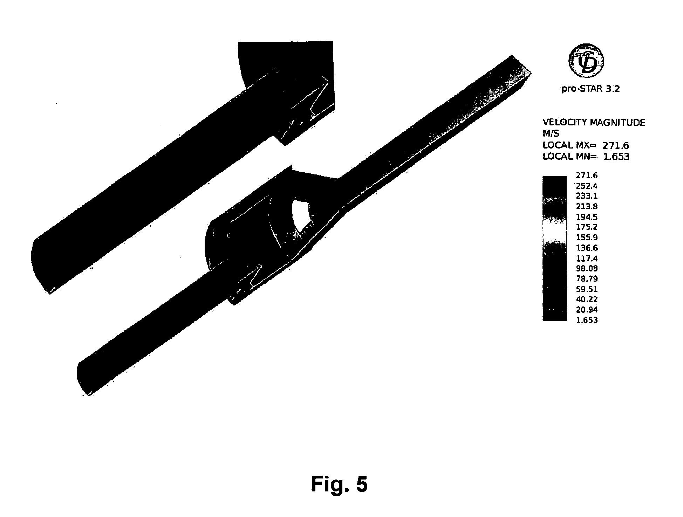

In order to verify the influence of the tube on effectiveness of the invention device, simulations were held for the model without the tube, and then the velocities and mass expenditure were compared with the results of the model equipped with the tube. The results obtained for those two cases are shown in table 1 and in figures 4 and 5 in the drawing.

**Table 1:**

| | velocity [ m/s ] | mass expenditure [ kg/s ] |
|---|---|---|
| With the tube | 433 | 0,00057 |
| Without the tube | 271 | 0,00080 |

In the case of a solution without the tube, velocity at the outlet fell by approx. 160 m/s. With the same pressure difference at the connectors of the device without the tube, mass expenditure increased by 0,00023 [kg/s].

Using the tube results in accumulation of velocity of the flowing agent in the zone behind the tube. It also results to reducing the expenditure of the flowing agent. Thanks to using the tubes of different diameters, it is possible to adjust the invention device to engines of different stroke capacities of the cylinders.

## Claims

1. A fuel gas feed device for an internal combustion engine comprising at least one solenoid valve feeding gas to a corresponding cylinder of the engine; the solenoid valve comprises an intake hole and at least one outlet hole for said gas fuel, an appropriate shutter, which is carried by the armature, in the shape of a hollow cylinder and moving in the body between the valve closing surface and the body resistance surface equipped with the absorber and activated by a relevant electromagnet, and an elastic member acting on said armature with a predetermined elasticity force sufficient to normally hold said shutter in position closing said outlet conduit in case there is no power supplied to the electromagnet; **characterised in that** the solenoid valve is encompassed within a gastight bousing formed by the bodies **(12, 13, 14)** connected to one another, and the first of them **(12),** constituting the housing of the nozzle **(18),** comprises an outlet hole **(C),** the second one **(13)** is the armature's guide **(25),** and the third of them **(14)** being at the same time an electromagnet's **(20)** pole comprises a gas intake hole; the surfaces of parting planes between the bodies are perpendicular to the axis of the flow channel formed by the bodies **(12, 13, 14),** and the shutter is located on the opposite side of an elastic member **(26)** in the armature **(25)** which is hollowed in such a manner that side holes are directed in accordance with the gas flow at an angle not less than 30° to the central hole axis and has a gas passage channel, which goes from the inlet **(B),** through the hollow elastic member **(26)** and the chamber **(D)** made in the armature **(25)** and the nozzle **(18)** of the shape close to the Venturi tube, and to the outlet hole **(C).**

2. A device as claimed in claim 1 **characterised in that**: between the armature and the body **(14)** there is an elastic member **(26)** constituting armature's **(25)** absorber, elasticity of which is chosen in a manner owing to which the armature does not spring back, and its impact is absorbed.

3. A device as claimed in claim 1 or 2, **characterised in that** an elastic member **(26)** is a coil-type spring.

4. A device as claimed in claim 1 or 3 **characterised in that** an elastic member **(26)** is a hollowed bar made of elastic material.

5. A device as claimed in claim 1 **characterised in that** the shutter **(24)** has the form of a cylinder and, advantageously, ends with the gas flow guide on the intake side.

6. A device as claimed in claim 1 **characterised in that** the surface of the shutter **(24)** closing the nozzle **(18)** is flat or constitutes a segment of the sphere of a large radius.

7. A device as claimed in claim 1 **characterised in that** the surface of the armature **(25)** and the body **(13)** in the working area have a reduced friction ratio, and advantageously are covered with the material reducing friction, especially with teflon.

8. A device as claimed in claim 1 **characterised in that** the body **(12)** has a calibrated nozzle **(18)** fastened in a manner preventing its disassembly.

9. A device as claimed in claim 1 **characterised in that** the body **(12)** is equipped with nozzles of different inside diameters.

10. A device as claimed in claim 1 **characterised in that** each of said solenoid valves is fastened directly to a corresponding connector **(09)** of the manifold **(02)** intake conduit.

11. A device as claimed in claim 1 **characterised in that** each cylinder of the engine **(01)** has an individual solenoid valve.

12. A device as claimed in claim 1 **characterised in that** electromagnet **(20)** is controlled selectively and in phases by corresponding modulated width impulses (PWM) generated by an electronic control unit **(11)** on the basis of signals defining the manner of engine **(01)** operation.

13. A device as claimed in claim 12, **characterised in that** electromagnet **(20)** is controlled by said control unit **(11)** in sequences, simultaneously with the operation of corresponding engine cylinders.
